# EUROPÄISCHE PATENTSCHRIFT

(11) **EP 0 804 686 B1**
(45) Veröffentlichungstag und Bekanntmachung des Hinweises auf die Patenterteilung: **15.10.2003**
(21) Anmeldenummer: 95911325.9
(22) Anmeldetag: 11.03.1995
(51) Int. Cl.: F04B 53/16, F04B 1/04

(54) **KOLBENPUMPE**
PISTON PUMP
POMPE A PISTON

(43) Veröffentlichungstag der Anmeldung: 05.11.1997
(73) Patentinhaber: Continental Teves AG & Co. oHG, 60488 Frankfurt (DE)
(72) Erfinder: VOLZ, Peter, D-64291 Darmstadt (DE); KAISER, Ralf, D-65203 Mainz-Amöneburg (DE); ZAVISKA, Dalibor, D-65760 Eschborn (DE)
(86) Internationale Anmeldenummer: EP9500911
(87) Internationale Veröffentlichungsnummer: WO96028661

(56) Entgegenhaltungen:
- EP-A- 0 354 725
- EP-A- 0 639 713
- DE-B- 1 267 985
- GB-A- 2 281 359

## Beschreibung

Die Erfindung betrifft eine Kolbenpumpe, insbesondere zur Druckmittelförderung in hydraulischen Bremsanlagen mit Schlupfregelung nach dem Oberbegriff des Anspruchs 1.

Aus der EP 0 354 725 A1 ist bereits eine Kolbenpumpe bekannt geworden, die über einen Pumpkolben verfügt, der innerhalb des Pumpengehäuses in einer Laufbuchse gleitet. Die Laufbuchse nimmt vom Pumpkolben und Kompressionsraum abgewandt den Ventilsitz für das Druckventil auf. Das Saugventil ist innerhalb des Kompressionsraums am Pumpkolben angeordnet und über einen kolbenseitigen Zulaufkanal mit einer Druckmittelquelle verbunden. Das Druckventil ist in einem Haltekörper angeordnet, der mittels einer Lancierung an der Laufbuchse befestigt ist, die gleichfalls den Ventilsitz zur Aufnahme des Druckventils aufweist. Die Pumpe hat den Nachteil, daß es separat an der Laufbuchse angeordneter Dichtelemente bedarf und die Befestigung der Laufbuchse ausschließlich durch die auf den Haltekörper ausgeübte Axialkraft möglich ist.

Daher ist es die Aufgabe der Erfindung, eine Kolbenpumpe der vorgenannten Art dahingehend weiter zu entwickeln, daß ohne Funktionsnachteile bei möglichst einfacher, kompakter Bauweise eine sichere Befestigung und Abdichtung der Laufbuchse im Pumpengehäuse gewährleistet ist.

Diese Aufgabe wird erfindungsgemäß durch die kennzeichnenden Merkmale des Patentanspruchs 1 gelöst, wonach abhängig von der Verschiebekraft der Laufbuchse gegenüber der Bohrung im Pumpengehäuse das am Umfang der Stufenbohrung im Pumpengehäuse befindliche Werkstoffvolumen in eine am Umfang befindliche Ausnehmung der Laufbuchse plastisch verdrängt wird.

Durch die in den Unteransprüchen aufgezeigten Maßnahmen sind zweckmäßige Ausbildungen der Erfindung angegeben, die im Zusammenhang mit den weiteren Merkmalen und Vorteilen der Erfindung nachfolgend anhand zweier Zeichnungen näher dargestellt und erläutert werden.

Es zeigen:
- Figur 1: einen Längsschnitt durch eine erste Ausführungsform einer Kolbenpumpe mit verschiedenen Ausführungsdetails,
- Figur 2: eine weitere Ausführungsvariante zur Kolbenpumpe im Längsschnitt.

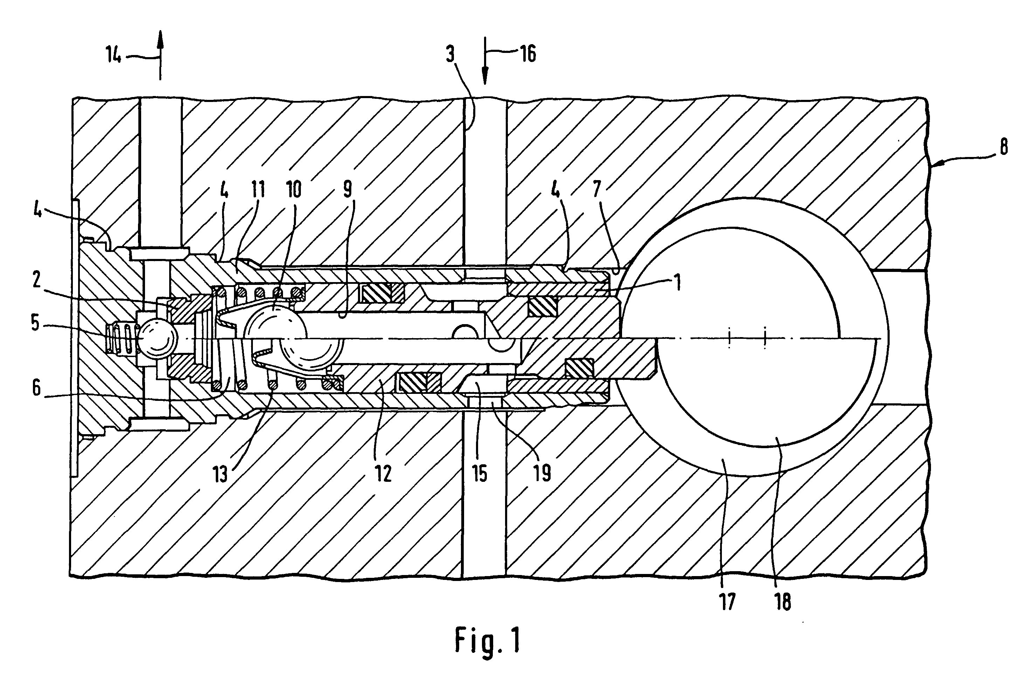

Es zeigt die Figur 1 einen Längsschnitt durch eine in einer Teilansicht gezeigten Pumpe zur Erläuterung des Aufbaus und der Funktion. Hierbei weist die oberhalb der Mittellinie gelegene horizontale Schnitthälfte der Kolbenpumpe die obere Totpunktstellung des Pumpkolbens 12 auf, während die untere Totpunktlage des Pumpkolbens 12 auf der unteren Blatthälfte des Halbschnitts zu erkennen ist. Die Figur 1 läßt eine koaxiale Hintereinanderschaltung des Saugventils 10 und des Druckventils 5 innerhalb der abgestuften Laufbuchse 11 und damit innerhalb des Pumpengehäuses 8 erkennen. Das Saugventil 10 wird bei Bedarf infolge der Wirkung einer Druckfeder in Richtung auf den am gestuften Pumpkolben 12 angeordneten Ventilsitz gedrückt. Das Saugventil 10 ist mittels eines Haltekäfigs am Kolbenboden gefesselt. Eine weitere, parallel zur ersten Druckfeder angeordnete Druckfeder 13 innerhalb des Kompressionsraums 6 kontaktiert zum Zwecke der Kolbenrückstellung über den Haltekäfig des Saugventils 10 die Stirnfläche des Pumpkolbens 12. Die Druckfeder 13 stützt sich mit ihren Windungsenden an einem den Ventilsitzkörper 2 aufweisenden Laufbuchsenendbereich ab. Unter anderem kommen als Druckmittelverbraucher 14 die Radbremsen einer schlupfgeregelten hydraulischen Bremsanlage infrage. Ein in die Laufbuchse 11 einmündender Druckmittelkanal 3 zur Saugseite der Pumpe verbindet die Druckmittelquelle 16, beispielsweise einen Bremsdruckgeber für eine schlupfgeregelte hydraulische Bremsanlage, mit dem Ringraum 15, der aus einem zwischen der Stufenbohrung in der Laufbuchse 11 und der Kolbenstufe am Pumpkolben 12 gelegenen Nachlaufraum mit variabler Volumenaufnahme gebildet ist. Der tangential in den Ringraum 15 einmündende Druckmittelkanal 3 steht mit einem den gestuften Pumpkolben 12 teilweise durchdringenden Zulaufkanal 9 in Verbindung, an dem das Saugventil 10 anliegt. Beiderseits der Kolbenstufe befinden sich am Kolbenschaft Ringnuten, in die Dichtungen eingesetzt sind, um einen Kurzschlußstrom zwischen dem Ringraum 15 und dem Kompressionsraum 6 bzw. dem Exzenterraum 17 zu verhindern. Wie aus der Abbildung erkennbar ist, wird der Pumpekolben 12 mittels eines Exzenterantriebs 18 in Hubbewegung versetzt. Die Stufenbohrung in der Laufbuchse 11 ist durch ein darin eingepreßtes Ringteil 1 kostengünstig hergestellt. Die Befestigung der Laufbuchse 11 im Pumpengehäuse 8 geschieht über sogenannte Selbstverstemmstellen, die an beiden Endabschnitten der Laufbuchse 11 vorhanden sind und den radial einmündenden Saug- und Druckkanal voneinander druckmitteldicht trennen. Beispielhaft ist im unteren Halbschnitt von Figur 1 als Alternative zur Selbstverstemmung eine Tannenbaumbefestigung in Richtung des Exzenterraums 17 skizziert. Das Druckventil 5 ist mit seiner Druckfeder mittels des in der Laufbuchse 11 eingestemmten Ventilsitzkörpers 2 gehalten. Damit bildet die Laufbuchse 11 eine teileminimierte Einheit. Durch die Verwendung eines Ringteils 1 in der Laufbuchse 11 zur Herstellung der Stufenbohrung ergibt sich überdies bei Bedarf in Kombination mit dem zugehörigen Pumpkolben 12 eine Vorladepumpe, mit entsprechendem Vorkompressionsraum, so daß die Laufbuchse zur Verbesserung des Pumpenfüllungsgrades infolge Vorkompression beiträgt.

Im nachfolgenden wird die Funktionsweise der Erfindung erläutert. In der abbildungsgemäßen unteren Totpunktstellung des Pumpkolbens 12 befindet sich das Druckventil 5 in Schließstellung, während zum Öffnen des Saugventils 10 eine im Zulaufkanal 9 wie auch im Ringraum 15 anstehende Flüssigkeitsmenge der Druckmittelquelle 16 eine gewisse Druckdifferenz benötigt, die durch eine viscositätsabhängige Ansaugdrosselung das Überströmen in den Kompressionsraum 6 bekanntlich erschwert. Auch im Kompressionsraum 6 verbleibt infolge des konstruktiv bedingten Totraums immer ein Druckmittelrestvolumen eingeschlossen, das bisher in der unteren Totpunktlage durch eine begrenzt nachströmende Flüssigkeitsmenge der Druckmittelquelle ergänzt wurde. Mit Beginnn des Kompressionshubs steigt im Kompressionsraum 6 der hydraulische Druck bis zur Überwindung der am Druckventil 5 wirksamen Federöffnungskraft und des Gegendrucks an. Gleichzeitig vergrößert sich jedoch erfindungsgemäß während der Kolbenbewegung zur oberen Totpunktlage die Volumenaufnahme im Ringraum 15 (siehe oberer Halbschnitt in der Abbildung), so daß vermehrt Druckmittel aus dem Druckmittelkanal 3 (Druckmittelquelle 16) nachgesaugt werden kann. Sobald sich der Pumpkolben 12 wieder in umgekehrter Richtung von der oberen Totpunktlage zu ursprünglichen unteren Totpunktlage bewegt (vergleiche untere Halbschnittdarstellung des Pumpkolbens), wird während des im Kompressionsraum 6 stattfindenen Saughubs das zwischen der Kolbenstufe und der Bohrungsstufe im Ringraum 15 nun vermehrt befindliche Druckmittelvolumen vorkomprimiert und infolge der in Richtung der Druckmittelquelle 16 wirksamen Drosselung über den Zulaufkanal 9 zweckmäßig in Richtung des Saugventils 10 in den Kompressionsraum 6 verdrängt. Die ansonsten unerwünschte Tatsache, wonach infolge der konstruktions- und temperaturbedingten Ansaugdrosselung im Druckmittelkanal 3 eine nicht unerhebliche Reduzierung der Fördermenge eintreten kann, begünstigt nunmehr die Überströmcharakteristik zum Kompressionsraum 6 des während des Kolbensaughubs im Ringraum 15 befindliche Ladevolumens. Die Rückströmung von Druckmittel in Richtung der Druckmittelquelle 16 ist infolge des Ansaugwiderstandes im Druckmittelkanal 3 relativ gering gegenüber dem erzielbaren zusätzlichen Förderdruck- bzw. Fördermengengewinn infolge des möglichen Aufladeeffekts.

Die Erfindung ermöglicht bei kleinstem Bauraumbedarf durch die Verwendung eines Stufenkolbens und eines Ringteils 1 innerhalb der Laufbuchse 11 unter Verwendung kleinster Teileanzahl eine erhebliche Verbesserung des Ansaugverhaltens der bisher bekannten Kolbenpumpe. Wesentlich für den Herstellvorgang der Kolbenpumpe ist die einfache Befestigungs- und Abdichtungsmaßnahme der Laufbuchse 11 im Pumpengehäuse 8, indem abhängig von der Verschiebekraft der Laufbuchse 11 gegenüber der Bohrung im Pumpengehäuse 8 das am Umfang der Stufenbohrung im Pumpengehäuse 8 befindliche Werkstoffvolumen in eine am Umfang befindliche Ausnehmung 4 der Laufbuchse 11 plastisch verdrängt wird. Zu diesem Zweck ist die Laufbuchse 11 vorzugsweise aus einem Automatenstahl und das Pumpengehäuse aus einer Leichtmetallegierung gefertigt.

Das Erfordernis einer speziellen, separaten Anordnung von Dichtungen an der Laufbuchse 11 sowie das Erfordernis zur Einleitung einer externen Haltekraft in das Pumpengehäuse entfällt nunmehr.

Das vorzugsweise aus einer Aluminiumlegierung gefertigte Pumpengehäuse 8 ist dementsprechend weniger hart als die beispielsweise aus Automatenstahl hergestellte Laufbuchse 11. Dieser Härteunterschied ist letztlich ausschlaggebend für die im wesentlichen formschlüssige Befestigung der Laufbuchse 11 im Pumpengehäuse 8. Als konstruktiv zweckdienliche Maßnahme erweist sich die als umlaufende Hohlkehlen ausgeführten Ausnehmungen 4 an der Laufbuchse 11, die jeweils an der im Durchmesser abgestuften Mantelfläche der Laufbuchse 11 angeordnet sind. Hierdurch kann das relativ weiche Werkstoffvolumen des Pumpengehäuses 8 während des Einpreßvorganges jeweils als umlaufende Nase in die Ausnehmungen 4 an der Laufbuchse 11 plastisch verformt einfließen und verdichtet werden. Damit übernimmt die Laufbuchse 11 - infolge ihrer in Fügerichtung abnehmenden Abstufung des Durchmessers - die Funktion eines Verstemmstempels, dem die Stufenbohrung des Pumpengehäuses 8 im Durchmesser angepaßt ist.

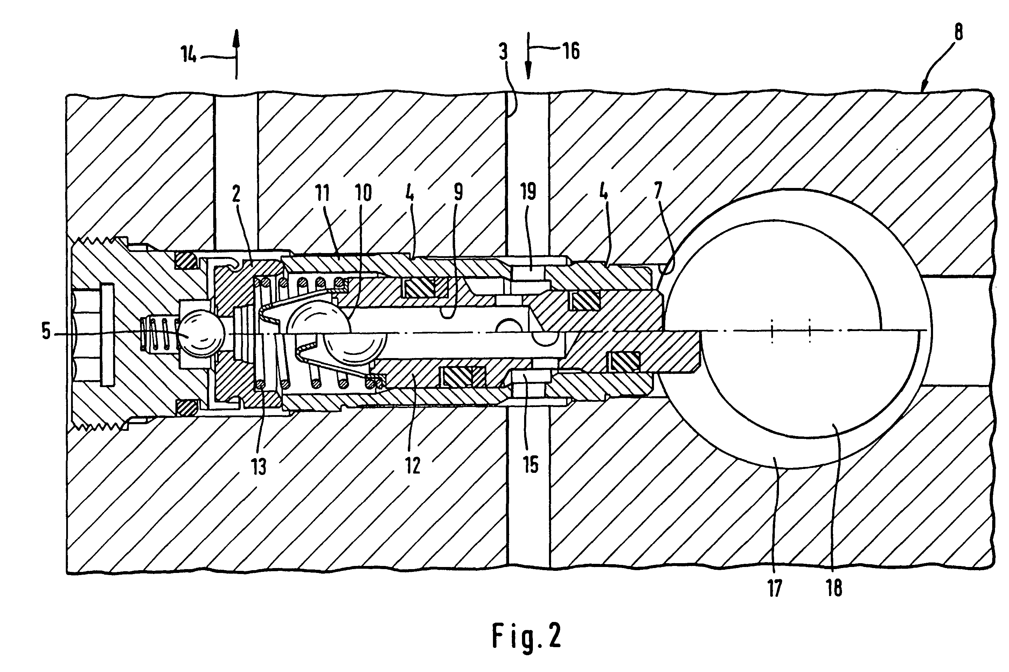

Die Figur 2 zeigt eine Ausführungsvariante zur Figur 1, wozu lediglich auf die Abweichungen gegenüber Figur 1 nachfolgend hingewiesen wird. Die Figur 2 unterscheidet sich durch die stufenförmig im Laufflächenbereich des Pumpkolbens 8 abgesetzte Form der Laufbuchse 11, so daß die separate Anordnung eines Ringteils in der Laufbuchse 11 entfällt. Ferner ist der das Druckventil 5 aufnehmende Ventilsitzkörper 2 als separates Teil ausgeführt, der mit seiner schneidenförmig umlaufenden Kante von einem Druckstück auf die Stirnfläche der Laufbuchse 11 angepreßt ist. Dies ermöglicht eine Vorprüfung des Druckventils 5 zur Feststellung der Dichtheit. Das Druckstück ist vorzugsweise über eine Lancierung mit dem Ventilsitzkörper 2 verbunden. Zwecks Ausrichtung der den Druckmittelkanal 3 mit dem Ringraum 15 verbindenden Querbohrungen der Laufbuchse 11 können an den Stirnflächen der Laufbuchse 11 formschlußerzeugende Mittel (Kerben, Ausnehmungen) vorgesehen sein, in die ein Einstellwerkzeug eingreift, die Laufbuchse 11 fluchtend zum Druckmittelkanal 3 ausrichtet bevor der eigentliche selbstverstemmende Einpreßvorgang einsetzt. Nach der Befestigung der Laufbuchse 11 im Pumpengehäuse 8 wird das als Schraubverschluß ausgeführte Druckstück, das den Ventilsitzkörper 2 mittels einer Lancierung aufnimmt, in die Stufenbohrung des Pumpengehäuses 8 eingeschraubt.

### Bezugszeichenliste

- 1: Ringteil
- 2: Ventilsitzkörper
- 3: Druckmittelkanal
- 4: Ausnehmung
- 5: Druckventil
- 6: Kompressionsraum
- 7: Stufenbohrung
- 8: Pumpengehäuse
- 9: Zulaufkanal
- 10: Saugventil
- 11: Laufbuchse
- 12: Pumpkolben
- 13: Druckfeder
- 14: Druckmittelverbraucher
- 15: Ringraum
- 16: Druckmittelquelle
- 17: Exzenterraum
- 18: Exzenterantrieb

## Patentansprüche

1. Kolbenpumpe, insbesondere zur Druckmittelförderung in hydraulischen Bremsanlage mit Schlupfregelung, mit einem Pumpengehäuse, das mehrere die Funktion der Kolbenpumpe bestimmenden Pumpenbauteile wie Pumpkolben, Saug- und Druckventil in einer Stufenbohrung des Pumpengehäuses aufweist, mit einer in der Stufenbohrung befestigten Laufbuchse, die den Pumpkolben führt, mit einem die Laufbuchse im Pumpengehäuse arretierenden Befestigungsmittel, **dadurch gekennzeichnet, daß** abhängig von der Verschiebekraft der Laufbuchse (11) in der Stufenbohrung des Pumpengehäuses (8) das am Umfang der Stufenbohrung befindliche Werkstoffvolumen in wenigstens eine am Umfang der Laufbuchse (11) befindliche Ausnehmung (4) plastisch verdrängt ist.

2. Kolbenpumpe nach Anspruch 1, **dadurch gekennzeichnet, daß** der Werkstoff des Pumpengehäuses (8) eine gegenüber der Laufbuchse (11) geringere Werkstoffhärte aufweist.

3. Kolbenpumpe nach Anspruch 1 oder 2, **dadurch gekennzeichnet, daß** der Umfang der Laufbuchse (11) mit als vorzugsweise Hohlkehlen ausgeführte Ausnehmungen (4) versehen ist, in die das Material des Pumpengehäuses (8) im Bereich der Stufenbohrung (7) näherungsweise proportional der Hubbewegung beider, relativ zueinander verschiebbarer Teile (7, 8) verdrängt ist.

4. Kolbenpumpe nach mindesten einem der vorhergehenden Ansprüche 1 bis 3, **dadurch gekennzeichnet, daß** die Laufbuchse (11) als Verstemmstempel ausgebildet ist.

5. Kolbenpumpe nach mindestens einem der vorhergehenden Ansprüche, **dadurch gekennzeichnet, daß** die Volumenaufnahme der Ausnehmungen (4) gleich oder kleiner ist als das verdrängbare Volumen des Pumpengehäuses (8) an einer Verstemmstelle.

6. Kolbenpumpe nach mindestens einem der vorhergehenden Ansprüche 1 bis 5, **dadurch gekennzeichnet, daß** die Laufbuchse (11) im Endbereich eine Stufenbohrung aufweist, in welche der als Stufenkolben ausgeführte Pumpkolben (12) geführt ist, und daß zwischen dem Stufenkolben und der Stufenbohrung der Laufbuchse (11) ein variabler Ringraum (15) gebildet ist, der mit einer Druckmittelquelle (16) in Verbindung steht.

7. Kolbenpumpe nach Anspruch 6, **dadurch gekennzeichnet, daß** die Stufenbohrung durch ein im Endabschnitt der Laufbuchse (11) gehaltenes Ringteil (1) gebildet ist.

8. Kolbenpumpe nach Anspruch 7, **dadurch gekennzeichnet, daß** das Ringteil (1) reib- und/oder formschlüssig im Endbereich der Laufbuchse (11) befestigt ist.

9. Kolbenpumpe nach mindestens einem der vorhergehenden Ansprüche, **dadurch gekennzeichnet, daß** die Laufbuchse (11) eine mit der Druckmittelquelle (16) in Verbindung stehende Querbohrung (19) aufweist, die über einen den Pumpkolben (12) durchdringenden Zulaufkanal (9) die Druckmittelquelle (16) mit einem Kompressionsraum (6) verbindet.

10. Kolbenpumpe nach Anspruch 9, **dadurch gekennzeichnet, daß** der Kompressionsraum (6) mittels des am Kolbenboden des Pumpkolbens (12) angeordneten Saugventils (10) und baulich in Reihe zum Saugventil (10) nachgeschalteten Druckventil (5) von der Druckmittelquelle (16) und dem Druckmittelverbraucher (14) absperrbar ist.

## Claims

1. Piston pump, especially for the pressure fluid delivery in hydraulic brake systems with slip control, including a pump housing having several pump components that determine the function of the piston pump such as pump piston, suction and pressure valve in a stepped bore of the pump housing, with a bush attached in the steeped bore and guiding the pump piston, and with an attachment means locking the bush in the pump housing,
**characterized in that** in dependence on the displacement force of the bush (11) in the stepped bore of the pump housing (8), the volume of material disposed at the periphery of the stepped bore is plastically deformed into at least one recess (4) disposed at the periphery of the bush (11).

2. Piston pump as claimed in claim 1,
**characterized in that** the material of the pump housing (8) has a material strength inferior in comparison to the bush (11).

3. Piston pump as claimed in claim 1 or 2,
**characterized in that** the periphery of the bush (11) includes recesses (4) preferably configured as grooves, into which recesses the material of the pump housing (8) close to the stepped bore (7) is displaced in approximation proportionally relative to the stroke movement of the two parts (7, 8) that are displaceable in relation to one another.

4. Piston pump as claimed in at least one of the preceding claims 1 to 3,
**characterized in that** the bush (11) is configured as a calking punch.

5. Piston pump as claimed in at least one of the preceding claims,
**characterized in that** the volume absorption of the recesses (4) is equal to or smaller than the displaceable volume of the pump housing (8) at a calked joint.

6. Piston pump as claimed in at least one of the preceding claims 1 to 5,
**characterized in that** the bush (11) in its end area has a stepped bore in which the pump piston (12) designed as a stepped piston is guided, and **in that** a variable annular chamber (15) being in communication with a pressure fluid source (16) is formed between the stepped piston and the stepped bore of the bush (11).

7. Piston pump as claimed in claim 6,
**characterized in that** the stepped bore is formed of an annular part (1) retained in the end portion of the bush (11).

8. Piston pump as claimed in claim 7,
**characterized in that** the annular part (1) is attached in the end area of the bush (11) in a frictional and/or form-locking manner.

9. Piston pump as claimed in at least one of the preceding claims,
**characterized in that** the bush (11) includes a transverse bore (19) being in communication with the pressure fluid source (16), said bore (19) connecting the pressure fluid source (16) to a compression space (6) by way of a supply channel (9) extending through the pump piston (12).

10. Piston pump as claimed in claim 9,
**characterized in that** the compression space (6) is adapted to be shut off in relation to the pressure fluid source (16) and the pressure fluid consumer (14) by means of the suction valve (10) arranged at the bottom of the pump piston (12) and the pressure valve (5) connected downstream and structurally in series in relation to the suction valve (10).

## Revendications

1. Pompe à piston, notamment pour l'acheminement d'agent de pression dans une installation de freinage hydraulique à régulation du glissement, comprenant un boîtier de pompe, qui comporte plusieurs parties de pompe déterminant la fonction de la pompe à piston, telles que piston de pompe, valve d'aspiration et valve de refoulement, dans un alésage étagé du boîtier de pompe, un fourreau de glissement, qui est fixé dans l'alésage étagé et qui guide le piston de pompe, et un moyen de fixation immobilisant le fourreau de glissement dans le boîtier de pompe, **caractérisée en ce qu'**en fonction de la force de déplacement en translation du fourreau de glissement (11) dans l'alésage étagé du boîtier de pompe (8), le volume de matière se trouvant à la périphérie de l'alésage étagé est refoulé d'une manière plastique dans au moins une partie en retrait (4) se trouvant à la périphérie du fourreau de glissement (11).

2. Pompe à piston suivant la revendication 1, **caractérisée en ce que** la matière du boîtier de pompe (8) possède une dureté de matière plus faible que le fourreau de glissement (11).

3. Pompe à piston suivant la revendication 1 ou 2, **caractérisée en ce que** la périphérie du fourreau de glissement (11) est pourvue de parties en retrait (4) qui sont réalisées de préférence sous forme de gorges et dans lesquelles la matière du boîtier de pompe (8) située dans la zone de l'alésage étagé (7) est refoulée d'une manière approximativement proportionnelle au déplacement parcouru par les deux pièces (7, 8) pouvant être déplacées en translation l'une vis-à-vis de l'autre.

4. Pompe à piston suivant au moins l'une des revendications précédentes 1 à 3, **caractérisée en ce que** le fourreau de glissement (11) est réalisé sous forme d'un poinçon de matage.

5. Pompe à piston suivant au moins l'une des revendications précédentes, **caractérisée en ce que** le volume que peuvent recevoir les parties en retrait (4) est égal ou inférieur au volume du boîtier de pompe (8) qui peut être refoulé en un emplacement de matage.

6. Pompe à piston suivant au moins l'une des revendications précédentes 1 à 5, **caractérisée en ce que** le fourreau de glissement (11) comporte, dans la zone d'extrémité, un alésage étagé dans lequel le piston de pompe (12) réalisé sous forme d'un piston étagé est guidé, et **en ce qu'**un espace annulaire variable (15), qui communique avec une source d'agent de pression (16), est formé entre le piston étagé et l'alésage étagé du fourreau de glissement (11).

7. Pompe à piston suivant la revendication 6, **caractérisée en ce que** l'alésage étagé est formé au moyen d'une pièce annulaire (1) maintenue dans la partie d'extrémité du fourreau de glissement (11).

8. Pompe à piston suivant la revendication 7, **caractérisée en ce que** la pièce annulaire (I) est fixée par friction ou par complémentarité de formes dans la zone d'extrémité du fourreau de glissement (11).

9. Pompe à piston suivant au moins l'une des revendications précédentes, **caractérisée en ce que** le fourreau de glissement (11) comporte un perçage transversal (19) qui communique avec la source d'agent de pression (16) et qui, par l'intermédiaire d'un conduit d'arrivée (9) traversant le piston de pompe (12), fait communiquer la source d'agent de pression (16) avec une chambre de compression (6).

10. Pompe à piston suivant la revendication 9, **caractérisée en ce que** la chambre de compression (6) peut être isolée vis-à-vis de la source d'agent de pression (16) et de l'utilisateur d'agent de pression (14) au moyen de la valve d'aspiration (10), disposée au fond du piston de pompe (12), et de la valve de refoulement (5) disposée structurellement en série vis-à-vis de la valve d'aspiration (10) en aval de celle-ci.
